# EUROPEAN PATENT APPLICATION

(11) **EP 3 892 667 A1**
(43) Date of publication of application: **13.10.2021**
(21) Application number: 19892258.5
(22) Date of filing: 31.10.2019
(51) Int. Cl.: C08G 69/18, C08G 69/20

(54) **METHOD FOR PREPARING POLYAMIDE BY ANIONIC RING-OPENING COPOLYMERIZATION AND POLYAMIDE PREPARED THEREBY**

(30) Priority: 05.12.2018 KR 20180155435
(71) Applicant: Hanwha Solutions Corporation, Jung-gu Seoul 04541 (KR)
(72) Inventor: KIM, Do Kyoung, Daejeon 34128 (KR); LEE, Jin Seo, Daejeon 34128 (KR); DO, Seung Hoe, Daejeon 34128 (KR)
(74) Representative: Klunker IP Patentanwälte PartG mbB
(86) International application number: PCT/KR2019/014577
(87) International publication number: WO 2020/116791

(57) **Abstract**

The present invention relates to a method for preparing a polyamide by anionic ring-opening copolymerization in consideration of the reactivity between a monomer and an alkali metal-based initiator. The present invention relates to a method for preparing a polyamide by anionic ring-opening copolymerization and a polyamide prepared thereby, in which, by adding a metal hydride, which is an alkali metal-based initiator, to a lactam having higher reactivity therewith, a production rate of an anion-initiated monomer is increased, thus enabling polymerization with a high conversion rate within a short polymerization reaction time to obtain a polymer having a uniform molecular weight. In the method for preparing the polyamide by anionic ring-opening copolymerization (AROP), a metal hydride is added as an alkali metal-based initiator in an amount of 0.01-20 parts by weight based on 100 parts by weight of two or more lactams, and the alkali metal-based initiator is mixed with a lactam having higher reactivity among two lactams. Therefore, the metal hydride, which is the alkali metal-based initiator, is added to the monomer having high reactivity therewith to increase a production rate of an anion-initiated monomer and improve a conversion rate into a random copolymer.

## Description

### TECHNICAL FIELD

The present invention relates to a method for preparing a polyamide by anionic ring-opening copolymerization in consideration of the reactivity of a monomer and an alkali metal-based initiator. The present invention relates to a method for preparing a polyamide by anionic ring-opening copolymerization and a polyamide prepared thereby, wherein a metal hydride, which is an alkali metal-based initiator, is added to a lactam having higher reactivity therewith to increase a production rate of an anion-initiated monomer, thus enabling polymerization with a high conversion rate within a short polymerization reaction time to obtain a polymer having a uniform molecular weight.

### BACKGROUND ART

A polyamide resin is a linear polymer bonded by an amide (-NHCO-) bond. The polyamide resin is strong, has excellent physical properties in terms of friction resistance, abrasion resistance, oil resistance, and solvent resistance, and is easily melt-molded. Therefore, the polyamide resin is widely used as clothing materials, fibers for industrial materials, engineering plastics, and the like. Polyamides may be classified into aliphatic polyamides, aromatic polyamides, and aliphatic cyclic polyamides according to molecular structures. The aliphatic polyamides may be collectively referred to as nylon, and the aromatic polyamides may be collectively referred to as aramid.

Polyamides are prepared by various polymerization methods and may be classified into those prepared by ring-opening polymerization of lactam, such as nylon 6, those prepared by polycondensation of diamines and dibasic acids, such as nylon 6,6, nylon 6,10 and nylon 4,6, and those prepared by polycondensation of aminocarboxylic acids, such as nylon 11 and nylon 12. Furthermore, so-called hybrid polymerized nylons, such as hybrid condensates of caprolactam and 6,10-nylon salts (hexamethylenediamine and sebacate), are industrially produced, and various polyamides including functional groups such as side chains and hydroxyl groups, aromatic rings, and hetero rings in molecules have been studied.

Lactam, for example, caprolactam may be anionically polymerized. This method generally uses a catalyst and an initiator (also referred to as an activator) (activated anionic polymerization). Initiators or activators that have been frequently used till now include diisocyanates or derivatives thereof.

For example, US Patent No. 4,754,000 (Bayer AG) discloses activated anionic polymerization of lactams, which prepares polyamides using biuret-group-containing polyisocyanates derived from non-aromatic diisocyanates as an activator.

In addition, Korean Patent Publication No. 2017-0073536 discloses a polyisocyanate capped with caprolactam as an activator by a method of preparing a polyamide through anionic polymerization of lactam.

However, Polymer, Volume 38 Number 4 1997. pp. 937-938 discloses a study on anionic polymerization of caprolactam using bisimide (isophthaloyl-bis-caprolactam) and lactam-magnesium bromide as a catalyst. In addition, the mixing of laurolactam is disclosed, but there is no disclosure on the premise that an alkali metal-based initiator reacts with lactam having high reactivity, and thus there is a limitation.

Finally, Polymer, 47, 2006. pp. 140-147 discloses poly(ε-caprolactam)-co-(ω-laurolactam), but there is no disclosure on the premise that the alkali metal initiator reacts with lactam having high reactivity.

Therefore, regarding a preparing method using anionic ring-opening polymerization or anionic ring-opening copolymerization, there is a need for various processes that use lactam as a monomer and include various initiators and activators to improve an anionic ring-opening polymerization reaction rate and increase a conversion rate of the monomer.
(Patent Literature 1) US 6,713,596
(Patent Literature 2) KR 2017-0073536

(Non-Patent Literature 2) Polymer, Volume 38 Number 4 1997. pp. 937-938
(Non-Patent Literature 3) Polymer, 47, 2006. pp. 140-147

### DESCRIPTION OF EMBODIMENTS

### TECHNICAL PROBLEM

The present invention aims to solve the above-described problems of the related art and the technical problems requested from the past.

An object of the present invention is to provide a method for preparing a polyamide by anionic ring-opening copolymerization, wherein a metal hydride, which is an alkali metal-based initiator, is added to a monomer having higher reactivity therewith among two lactams to increase a production rate of an anion-initiated monomer and improve a conversion rate into a random copolymer.

That is, an object of the present invention is to provide a method for preparing a polyamide by anionic ring-opening copolymerization and a polyamide prepared thereby, wherein polymerization is enabled with a high conversion rate within a short polymerization reaction time to obtain a polymer having a uniform molecular weight.

In addition, an object of the present invention is to provide a method for preparing a polyamide by anionic ring-opening copolymerization and a polyamide prepared thereby, wherein the method is an eco-friendly process method without using a solvent as an activator and enables polymerization with a high conversion rate within a short polymerization reaction time at a low temperature to obtain a polymer having a uniform molecular weight, compared to an existing polymerization method.

### SOLUTION TO PROBLEM

In order to achieve the objects, the present invention provides a method for preparing a polyamide by anionic ring-opening copolymerization (AROP).

The present invention provides a method for preparing a polyamide by anionic ring-opening copolymerization, wherein a metal hydride is added in an amount of 0.01-20 parts by weight based on 100 parts by weight of two or more lactams, and the metal hydride is mixed with a lactam having higher reactivity among two lactams.

The two lactams may have 3-12 carbon atoms constituting a lactam ring, or the 3-12 carbon atoms are substituted with an alkyl group.

In one preferred embodiment of the present invention, hydrogen generated after the metal hydride is mixed with the lactam having higher reactivity among the two lactams may be removed.

The alkali metal-based initiator may include a metal hydride, and the metal hydride may include at least one selected from sodium hydride and potassium hydride.

According to one preferred embodiment of the present invention, the activator may include at least one selected from the group consisting of carbon dioxide (CO₂), benzoyl chloride, N-acetyl caprolactam, N-acetyl laurolactam, octadecyl isocyanate, toluene diisocyanate (TDI), and hexamethylene diisocyanate (HDI). An amount of the activator may be in a range of 0.002-1.0 parts by weight.

According to one preferred embodiment of the present invention, at least one selected from the group consisting of ethylene-bis-stearamide (EBS), an amine compound, a urea compound, and a di-urea compound may be added as a molecular weight controller. In this case, an amount of the molecular weight controller may be in a range of 0.01-10 parts by weight.

In one preferred embodiment according to the present invention, the lactam in the polymerization reaction may have a conversion rate of 95% or more.

Furthermore, in the polymerization reaction, a polymerization reaction time may be about 120 minutes and a polymerization temperature may be in a range of 160-300°C. The polymerization reaction time is not particularly limited and may be appropriately adjusted according to the weight of the added compound or the size and type of the reactor.

On the other hand, the present invention provides a polyamide produced by the above-described method. In this case, a weight average molecular weight (Mw) of the polyamide may be in a range of 20,000 to 200,000, and the polyamide has a polydispersity index of 1 to 4.

According to one preferred embodiment of the present invention, the polyamide may have at least one selected from a linear structure, a branched structure, a hyperbranched structure, and a dendritic structure.

### ADVANTAGEOUS EFFECTS OF DISCLOSURE

As described above, in a method for preparing a polyamide by anionic ring-opening copolymerization, a metal hydride, which is an alkali metal-based initiator, is added to a lactam monomer having high reactivity therewith among two lactams to increase a production rate of an anion-initiated monomer and improve a conversion rate into a random copolymer.

In addition, the present invention is an eco-friendly processing method without using a solvent as a catalyst and has an effect of enabling polymerization with a high conversion rate within a short polymerization reaction time at a low temperature to obtain a polymer having a uniform molecular weight, compared to an existing polymerization method.

### BRIEF DESCRIPTION OF DRAWINGS

FIG. 1 is a graph showing comparison of polymerization reaction rates according to a combination of caprolactam and laurolactam, which are two lactams prepared according to the present invention, and an initiator.
FIG. 2 is a graph showing a polymer polymerization rate according to a combination of caprolactam and laurolactam, which are two lactams prepared according to the method of the present invention, and an initiator.

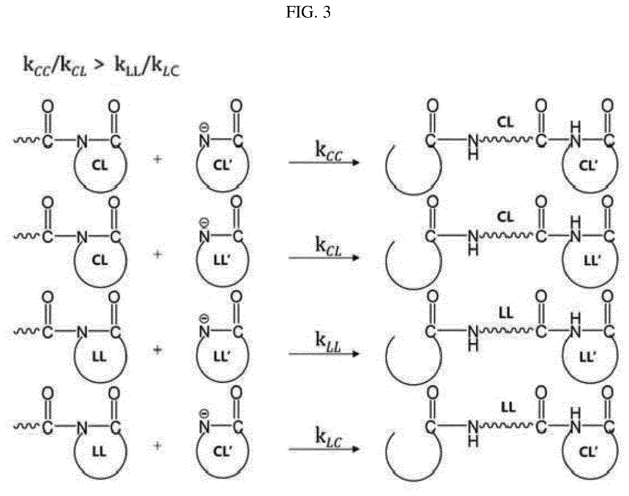

FIG. 3 shows a mechanism of a polyamide random copolymer prepared according to the present invention.

### BEST MODE

The present invention will be described with reference to specific embodiments and the accompanying drawings. The embodiments will be described in detail in such a manner that the present invention may be carried out by those of ordinary skill in the art. It should be understood that various embodiments of the present invention are different, but need not be mutually exclusive. For example, certain shapes, structures, and features described herein may be implemented in other embodiments without departing from the spirit and scope of the present invention in connection with one embodiment.

Therefore, the following detailed description is not to be taken in a limiting sense, and the scope of the present invention is to be limited only by the appended claims and the entire scope of equivalents thereof, if properly explained.

In addition, unless otherwise specified in the present specification, the term "substitution" or "substituted" means that one or more hydrogen atoms in the functional groups of the present invention are substituted with one or more substituents selected from the group consisting of a halogen atom (-F, -Cl, -Br, or -I), a hydroxy group, a nitro group, a cyano group, an amino group, an amidino group, a hydrazine group, a hydrazone group, a carboxyl group, an ester group, a ketone group, a substituted or unsubstituted alkyl group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocyclic group. These substituents may be linked to each other to form a ring.

In the present invention, unless otherwise specified, the term "substituted" means that a hydrogen atom is substituted with a substituent such as a halogen atom, a C₁-C₂₀ hydrocarbon group, a C₁-C₂₀ alkoxy group, and a C₆-C₂₀ aryloxy group.

In addition, unless otherwise specified, the term "hydrocarbon group" refers to a linear, branched, or cyclic saturated or unsaturated hydrocarbon group. The alkyl group, the alkenyl group, the alkynyl group, and the like may be linear, branched, or cyclic.

In addition, unless otherwise specified in the present specification, the term "alkyl group" refers to a C₁-C₃₀ alkyl group and the term "aryl group" refers to a C₆-C₃₀ aryl group. In the present specification, the term "heterocyclic group" refers to a group in which one to three heteroatoms selected from the group consisting of O, S, N, P, Si, and any combination thereof are contained in one ring. Examples of the heterocyclic group may include pyridine, thiophene, and pyrazine, but the present invention is not limited thereto.

Hereinafter, embodiments of the present invention will be described with reference to the accompanying drawings, so that those of ordinary skill in the art can easily carry out the present invention.

As described above, there have been limitations in limiting the inefficiency of the processing, which is caused by the problems occurring in hydrolytic polymerization, catalytic ring-opening polymerization, and anionic ring-opening polymerization among the conventional polyamide polymerization methods, and the increase in viscosity due to side reactions at high temperature polymerization.

Accordingly, the present invention provides a method for preparing a polyamide by anionic ring-opening copolymerization, which is capable of increasing a conversion rate of lactam while increasing a polymerization reaction rate. Specifically, a metal hydride, which is an alkali metal-based initiator, is added to a lactam monomer having high reactivity therewith among two lactams to increase a production rate of an anion-initiated monomer and improve a conversion rate into a random copolymer.

In addition, since carbon dioxide (CO₂) is used instead of using a solvent as a catalyst, the present invention is an eco-friendly process and enables polymerization with a high conversion rate within a short polymerization reaction time at a low temperature to obtain a polymer having a uniform molecular weight, compared to an existing polymerization method, thereby providing the solution to the above-described problems.

A method for preparing a polyamide by anionic ring-opening copolymerization in consideration of reactivity of a monomer and reactivity of an initiator according to the present invention, and a polyamide prepared thereby will be described in detail.

According to the present invention, a method for preparing a polyamide by anionic ring-opening copolymerization (AROP) is provided.

Specifically, the present invention provides a method for preparing a polyamide by anionic ring-opening copolymerization, wherein a metal hydride is added in an amount of 0.01-20 parts by weight based on 100 parts by weight of the two or more lactams, and the metal hydride is mixed with a lactam having higher reactivity among two lactams.

In addition, the present invention provides the method for preparing a polyamide by anionic ring-opening copolymerization, wherein the two lactams have 3-12 carbon atoms constituting a lactam ring, or the 3-12 carbon atoms are substituted with an alkyl group.

The lactam may include, for example, piperidone, pyrrolidone, enantolactam, and caprolactam. In some cases, the lactam may include propiolactam, 2-pyrrolidone, valerolactam, heptanolactam, octanolactam, nonanolactam, decanolactam, undecanolactam, and dodecanolactam. However, this corresponds to an embodiment, and the present invention is not limited thereto.

Caprolactam and laurolactam, which are the two lactams according to the present invention, may be preferably used as monomers for preparing the polyamide. However, the present invention is not limited thereto, and the lactams are used to prepare a copolymer polyamide, and preferably polyamide 612.

Caprolactam includes 6 carbon atoms, and laurolactam includes 12 carbon atoms. Therefore, the lactams are different in reactivity from the metal hydride, which is the alkali metal-based initiator, and caprolactam has higher reactivity with the alkali metal-based initiator. Therefore, the alkali metal-based initiator, preferably the metal hydride, and more preferably NaH, is added to caprolactam to increase the reaction rate of the entire copolymerization, and the lactam has an effect of increasing the conversion rate to 95% or more. That is, in the method for preparing the anionic random copolymer, NaH may be added to caprolactam, which is a monomer having high reactivity, to increase the production rate of the anion-initiated monomer, thereby improving the conversion rate of the random copolymer.

In one preferred embodiment of the present invention, hydrogen generated after the metal hydride is mixed with the lactam having higher reactivity among the two lactams is removed. According to the present invention, when NaH, which is the metal hydride, is included in an amount of 0.01-20 parts by weight and an excessive amount of the metal hydride is added, a large amount of hydrogen gas is generated. At this time, a pressure inside a reactor rises. Therefore, since it is necessary to remove the flammable hydrogen gas for stability of the reaction, a process of removing hydrogen may be included.

The alkali metal-based initiator according to the present invention is an initiator for preparing a polyamide, is also used as a catalyst, and may include at least one selected from the group consisting of a metal hydride, a metal hydroxide, and a metal alkoxide as a compound that allows the formation of anions of caprolactam.

In a specific example, the metal hydride may include sodium hydride and potassium hydride, the metal hydroxide may include sodium hydroxide and potassium hydroxide, and the metal alkoxide may include potassium tert-butoxide and aluminum isopropoxide, but the present invention is not limited thereto.

For example, it may include sodium caprolactamate or potassium caprolactamate, alkaline earth metal caprolactamate, for example, magnesium bromide caprolactamate, magnesium chloride caprolactamate, or magnesium biscaprolactamate, an alkali metal, for example, sodium or potassium, alkali metal base, for example, sodium base, for example sodium hydride, sodium, sodium hydroxide, sodium methanolate, sodium ethanolate, sodium propanolate, or sodium butanolate, or at least one selected from the group consisting of potassium base, for example, potassium hydride, potassium, potassium hydroxide, potassium methanolate, potassium ethanolate, potassium propanolate, potassium butanolate, or any mixture thereof, preferably at least one selected from the group consisting of sodium caprolactate, potassium caprolactate, magnesium bromide caprolactate, magnesium chloride caprolactate, magnesium biscaprolactate, sodium hydride, sodium, sodium hydroxide, sodium ethanolate, sodium methanolate, sodium propanolate, sodium butanolate, potassium hydride, potassium, potassium hydroxide, potassium methanolate, potassium ethanolate, potassium propanolate, potassium butanolate, and any mixture thereof. In addition, at least one selected from the group consisting of sodium hydride, sodium, and sodium caprolactamate may be included.

A metal catalyst, which is the alkali metal-based initiator, may be used in the form of a solid or a solution. The metal catalyst is preferably used in the form of a solid. The catalyst is preferably added to a caprolactam melt in which the catalyst can be dissolved. These catalysts lead to particularly rapid reactions, thereby increasing the efficiency of the process of preparing the polyamide according to the present invention, and preferably polyamide 612.

According to the present invention, the amount of the alkali metal-based initiator may be in a range of 0.01-20 parts by weight based on 100 parts by weight of the entire two or more lactams. The amount of the alkali metal-based catalyst may be in a range of preferably 0.03-10 parts by weight, and more preferably 0.05-5.0 parts by weight.

In this case, when the alkali metal-based initiator is added in an amount of less than 0.01 parts by weight, unpolymerization may occur or a reaction rate may decrease. When the amount of the alkali metal-based initiator exceeds 20 parts by weight, a reaction rate cannot be controlled due to a rapid reaction. Thus, gelation may proceed or discoloration may occur. Therefore, the above range is preferable.

The activator according to the present invention may be preferably carbon dioxide (CO₂), but the present invention is not limited thereto. For example, the activator may include at least one selected from the group consisting of benzoyl chloride, N-acetyl caprolactam, N-acetyl laurolactam, octadecyl isocyanate, toluene diisocyanate (TDI), hexamethylene diisocyanate (HDI), and any mixture thereof.

According to the present invention, the amount of the carbon dioxide may be in a range of 0.002-1.0 part by weight based on 100 parts by weight of the entire lactam. The amount of the carbon dioxide may be in a range of preferably 0.005-0.5 parts by weight, and more preferably 0.01-0.25 parts by weight.

In this case, when the carbon dioxide is added in an amount of less than 0.002 parts by weight, unpolymerization may occur or a reaction rate may decrease. When the amount of the carbon dioxide exceeds 1.0 part by weight, a gelation problem may occur. Therefore, the above range is preferable.

The polymerization reaction time is not particularly limited and may be appropriately adjusted according to the weight of the added compound or the size and type of the reactor.

Finally, the molecular weight controller according to the present invention may be ethylene-bis-stearamide (EBS), but the present invention is not limited thereto. The molecular weight controller may include at least one selected from the group consisting of an amine compound, a urea compound, and a di-urea compound.

According to the present invention, the amount of the molecular weight controller may be in a range of 0.01-10 parts by weight based on 100 parts by weight of the entire lactam. The amount of the molecular weight controller may be in a range of preferably 0.05-7.0 parts by weight, and more preferably 0.1-3.0 parts by weight.

In this case, when the molecular weight controller is added in an amount of less than 0.01 parts by weight, a high molecular weight polymer may be generated or a gelation problem may occur. When the amount of the molecular weight controller exceeds 10 parts by weight, a reaction rate may not be controlled due to a rapid reaction. Thus, gelation may proceed or discoloration may occur.

In one preferred embodiment according to the present invention, the reaction time of the polymerization reaction is about 120 minutes.

In one preferred embodiment according to the present invention, the lactam in the polymerization reaction may have a conversion rate of 95% or more.

In addition, in the polymerization reaction, the reaction time taken until the conversion rate becomes 95% or more is about 120 minutes.

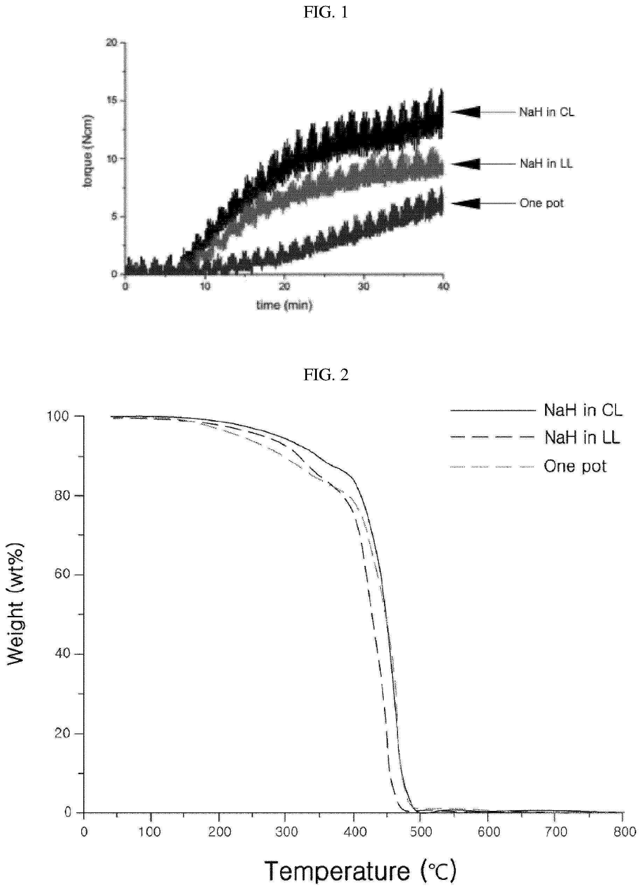

Therefore, the alkali metal-based initiator, preferably the metal hydride, and more preferably NaH, is added to caprolactam to increase the reaction rate of the entire copolymerization, and the lactam has an effect of increasing the conversion rate to 95% or more. In addition, this will be described with reference to graphs of FIGS. 1 and 2.

The polymerization temperature according to the invention is in a range of 160-300°C. The polymerization temperature is preferably in a range of 180-250°C. In this case, the monomer and initiator are effective in the polymerization reaction in terms of the reaction rate and yield.

Hereinafter, preferred examples are presented so as to help the understanding of the present invention. However, the following examples are for illustrative purposes only and the present invention is not limited by the following examples.

### [Examples]

### <Example 1>

### Preparation of polymerization sample by adding metal-based initiator to caprolactam

Vacuum was applied to reactors A and B so as to remove a small amount of moisture affecting anionic polymerization, and the reactors A and B was maintained at a temperature of 70°C. The molar equivalents of caprolactam and laurolactam used as the monomers and the metal hydride NaH used as the alkali metal-based initiator were weighed to be x:100-x:0.15. The weighed caprolactam and NaH were added to the reactor A, an oil bath was adjusted to a temperature of 160°C or higher, and laurolactam was melted under a nitrogen atmosphere. After the product of the reactor A and the monomer of the reactor B were transferred to one place to meet each other, the reaction temperature was set to 200°C or higher, and 0.1-1 equivalent of a molecular weight controller and 0.01-0.2 equivalent of carbon dioxide (CO₂) as an activator were added. When the polymerization was completed, water was added to terminate the reaction, the product was washed several times with water and alcohol and was dried in a vacuum oven at 100°C for 12 hours or more to recover a sample.

### <Comparative Example 1>

A polyamide copolymer was prepared in the same manner as in Example 1, except that a metal hydride NaH used as an alkali metal-based initiator was added to laurolactam.

### <Comparative Example 2>

A polyamide copolymer was prepared in the same manner as in Example 1, except that a metal hydride NaH used as an alkali metal-based initiator was added to both caprolactam and laurolactam (one pot system).

### [Experimental Example]

The molecular weight and the polydispersity index (PDI) of Example and Comparative Examples 1 and 2 were confirmed and the results thereof are shown. In addition, the monomer conversion rate (%) and the reaction rate were measured and the results thereof are shown. The molecular weight was measured using TOSOH's HLC-8320 model. TFE (2,2,2,-trifluoroethanol) was used as an eluent, and Super AWM-H was used as a column.

**[Table 1]**

| | Molecular weight (g/mol) | Polydispersity index (PDI) | Monomer conversion rate (%) | Reaction time (min) |
|---|---|---|---|---|
| Example 1 | 76,300 | 2.2 | 97.4 | 10 |
| Comparative Example 1 | 77,900 | - | 96.6 | 20 |
| Comparative Example 2 | 67,900 | - | 94.7 | 30 |

In the case of Example 1, it can be confirmed that the monomer conversion rate is high and the reaction time (min) is also significantly fast, compared to Comparative Examples 1 and 2. In addition, it can be confirmed that the polydispersity index (PDI) is also constant.

Therefore, in the method for preparing the polyamide by anionic ring-opening copolymerization, it can be confirmed that the metal hydride, which is the alkali metal-based initiator, is added to the lactam monomer having high reactivity therewith among the two lactams to increase the production rate of the anion-initiated monomer and improve the conversion rate into the random copolymer.

In addition, it can be confirmed that the present invention is also an eco-friendly processing method without using a solvent as a catalyst and has an effect of enabling polymerization with a high conversion rate within a short polymerization reaction time at a low temperature to obtain a polymer having a uniform molecular weight, compared to a conventional polymerization method.

Although the present invention has been described with reference to the drawings according to embodiments of the present invention, it will be understood by those of ordinary skill in the art that various applications and modifications can be made thereto without departing from the scope of the present invention.

## Claims

1. A method for preparing a polyamide by anionic ring-opening copolymerization (AROP), wherein a metal hydride is added as an alkali metal-based initiator in an amount of 0.01-20 parts by weight based on 100 parts by weight of two or more lactams, and the alkali metal-based initiator is mixed with a lactam having higher reactivity among two lactams.

2. The method of claim 1, wherein the two lactams have 3-12 carbon atoms constituting a lactam ring, or the 3-12 carbon atoms are substituted with an alkyl group.

3. The method of claim 1, wherein hydrogen generated after the alkali metal-based initiator is mixed with the lactam having higher reactivity among the two lactams is removed.

4. The method of claim 1, wherein the alkali metal-based initiator comprises a metal hydride, and the metal hydride comprises at least one selected from sodium hydride and potassium hydride.

5. The method of claim 1, wherein at least one selected from the group consisting of carbon dioxide (CO₂), benzoyl chloride, N-acetyl caprolactam, N-acetyl laurolactam, octadecyl isocyanate, toluene diisocyanate (TDI), and hexamethylene diisocyanate (HDI) is further added as an activator.

6. The method of claim 5, wherein an amount of the activator is in a range of 0.002-1.0 parts by weight.

7. The method of claim 1, wherein at least one selected from the group consisting of ethylene-bis-stearamide (EBS), an amine compound, a urea compound, and a di-urea compound is further added as a molecular weight controller.

8. The method of claim 7, wherein an amount of the molecular weight controller is in a range of 0.01-10 parts by weight.

9. The method of claim 1, wherein the lactam in the polymerization reaction has a conversion rate of 95% or more.

10. The method of claim 1, wherein the polymerization temperature is in a range of 160-300°C.

11. A polyamide prepared by the method of any one of claims 1 to 10.

12. The method of claim 11, wherein the polyamide has a polydispersity index (PDI) of 1 to 4.

13. The method of claim 11, wherein the polyamide has at least one selected from a linear structure, a branched structure, a hyperbranched structure, and a dendritic structure.
